# EUROPEAN PATENT SPECIFICATION

(11) **EP 2 900 985 B1**
(45) Date of publication and mention of the grant of the patent: **07.09.2022**
(21) Application number: 13868840.3
(22) Date of filing: 25.09.2013
(51) Int. Cl.: F02C 9/26, F23R 3/30, F23R 3/26

(54) **MODEL BASED FUEL-AIR RATIO CONTROL**
MODELLBASIERTE STEUERUNG DES KRAFTSTOFF-LUFTVERHÄLTNISSES
COMMANDE DE RAPPORT AIR/CARBURANT BASÉE SUR UN MODÈLE

(30) Priority: 28.09.2012 US 201213631394
(43) Date of publication of application: 05.08.2015
(73) Proprietor: Raytheon Technologies Corporation, Farmington, CT 06032 (US)
(72) Inventor: MEISNER, Richard P., Glastonbury, Connecticut 06033 (US); WINEBRENNER, Brian V., Tolland, Connecticut 06084 (US); FEULNER, Matthew R., West Hartford, Connecticut 06447 (US); KARPMAN, Boris, Marlborough, Connecticut 06447 (US); MA, David L., Avon, Connecticut 06001 (US)
(74) Representative: Dehns
(86) International application number: PCT/US2013/061636
(87) International publication number: WO 2014/105231

(56) References cited:
- GB-A- 2 474 761
- US-A- 3 747 340
- US-A- 4 423 594
- US-A- 4 566 266
- US-A- 5 596 871
- US-A- 5 743 079
- US-A1- 2004 200 206
- US-A1- 2008 243 352
- US-A1- 2012 017 600
- US-B2- 7 849 732

## Description

### BACKGROUND

The present invention relates generally to gas turbine engine control, and more, particularly to lean blowout avoidance by model based fuel-air ratio control.

Modern Brayton and Ericsson cycle engines, including gas turbine engines for aircraft applications, continue to grow more complex. These engines require sophisticated control systems to handle increasing operational demands at reduced tolerances. Such engine control systems command engine actuators for control parameters such as estimated fuel-air ratio rate and variable engine geometries to achieve desired values of output parameters such as net thrust or engine rotor speed. A variety of control methods are currently used toward this end, including model-based control algorithms using predictive models that relate thermodynamic parameters such as flow rate, pressure, and temperature to input and output variables such as overall thrust, power output, or rotational energy.

Engine control systems are typically provided with a plurality of inputs including both current operating parameters and target parameters. Current operating parameters may include engine parameters such as rotor speeds, engine temperatures, and flow rates, as well as environmental parameters such as altitude and inlet total air pressure and air temperature. Some current operating parameters are directly measured, while others may be fixed at manufacture or estimated based on measured parameters. Target parameters may include desired rotor speeds or net thrust values specified according to desired aircraft activities.

In addition to achieving specified target parameters, engine control systems are expected to avoid engine trajectories resulting in engine states that unduly reduce component lifetimes or increase likelihoods of undesired events such as engine surge, compressor stall, or engine blowout. Lean combustor blowout, in particular, occurs when the fuel-air ratio (FAR) in the combustor of a gas turbine engine falls sufficiently that the combustor flame is extinguished. Conventional systems manage FAR indirectly, for example by limiting the fuel-sensed combustor pressure ratio, so as to avoid lean blowout conditions.

Various fuel-air ratio control systems for gas turbine engines are disclosed in US 2008/243352 A1, US 5596871 A1, US 2004/200206 A1 and GB 2474761 A.

### SUMMARY

From a first aspect, the invention provides a fuel-air control system for a gas turbine engine, as set forth in claim 1.

From a second aspect, the invention provides a method for controlling a gas turbine engine to avoid lean compressor blowout, as set forth in claim 8.

### BRIEF DESCRIPTION OF THE DRAWINGS

FIG. 1 is a simplified cross-sectional view of a gas turbine engine.
FIG. 2 is a schematic block diagram of a fuel-air ratio (FAR) control system for the gas turbine engine of FIG. 1.
FIG. 3 is a flowchart of a method performed by the FAR control system of FIG. 2.

### DETAILED DESCRIPTION

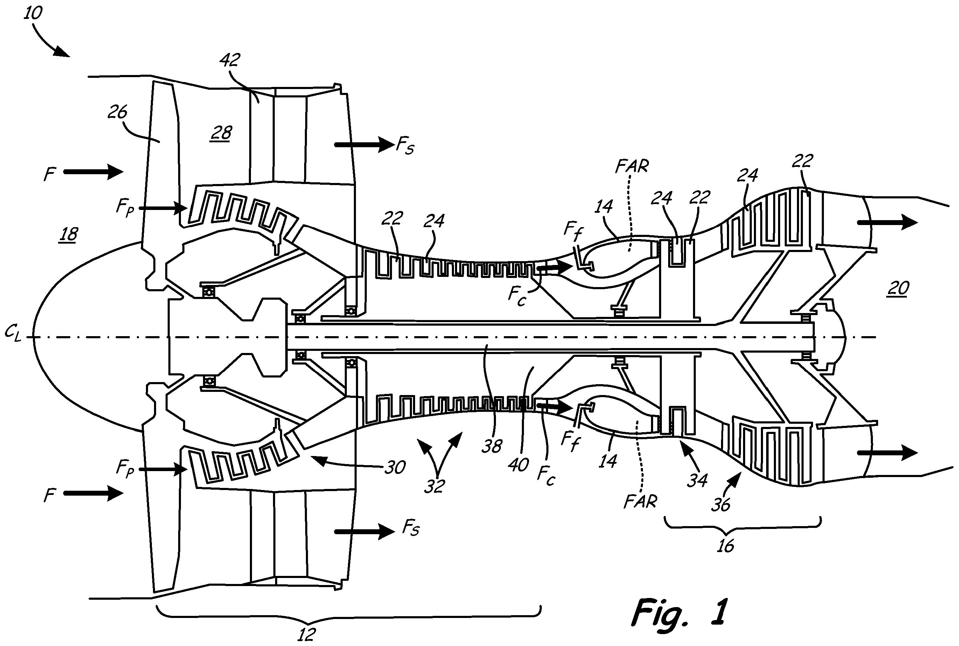

FIG. 1 is a cross-sectional view of gas turbine engine 10. Gas turbine engine 10 comprises compressor section 12, combustor 14, and turbine section 16 arranged in flow series between upstream inlet 18 and downstream exhaust 20. Compressor section 12 and turbine section 16 are arranged into a number of alternating stages of rotor airfoils (or blades) 22 and stator airfoils (or vanes) 24.

In the turbofan configuration of FIG. 1, propulsion fan 26 is positioned in bypass duct 28, which is coaxially oriented about the engine core along centerline (or turbine axis) C_{L}. An open-rotor propulsion stage 26 may also be provided, with turbine engine 10 operating as a turboprop or unducted turbofan engine. Alternatively, fan rotor 26 and bypass duct 28 may be absent, with turbine engine 10 configured as a turbojet or turboshaft engine, or an industrial gas turbine.

In the two-spool, high bypass configuration of FIG. 1, compressor section 12 includes low pressure compressor (LPC) 30 and high pressure compressor (HPC) 32, and turbine section 16 includes high pressure turbine (HPT) 34 and low pressure turbine (LPT) 36. Low pressure compressor 30 is rotationally coupled to low pressure turbine 36 via low pressure (LP) shaft 38, forming the LP spool or low spool. High pressure compressor 32 is rotationally coupled to high pressure turbine 34 via high pressure (HP) shaft 40, forming the HP spool or high spool.

Flow F at inlet 18 divides into primary (core) flow Fp and secondary (bypass) flow Fs downstream of fan rotor 26. Fan rotor 26 accelerates secondary flow Fs through bypass duct 28, with fan exit guide vanes (FEGVs) 42 to reduce swirl and improve thrust performance. In some designs, structural guide vanes (SGVs) 42 are used, providing combined flow turning and load bearing capabilities.

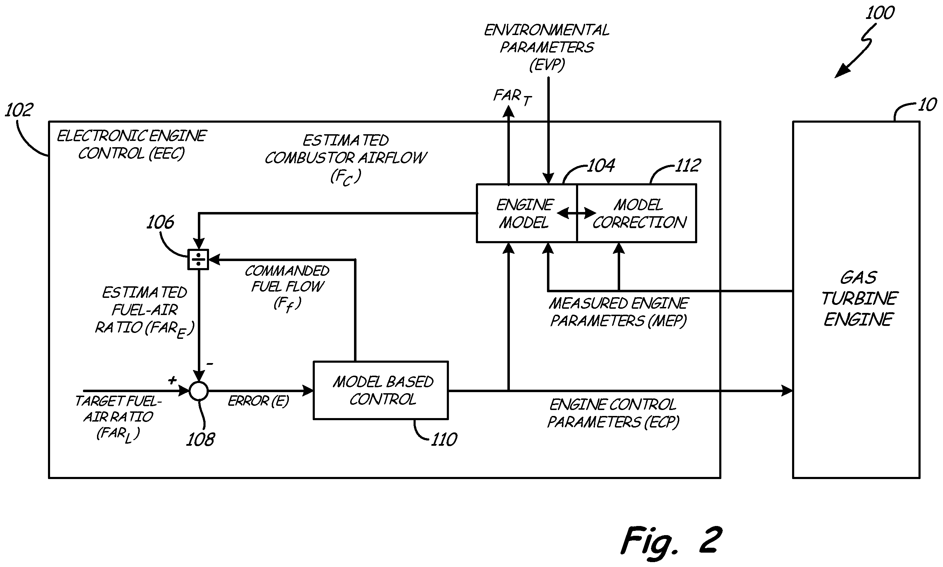

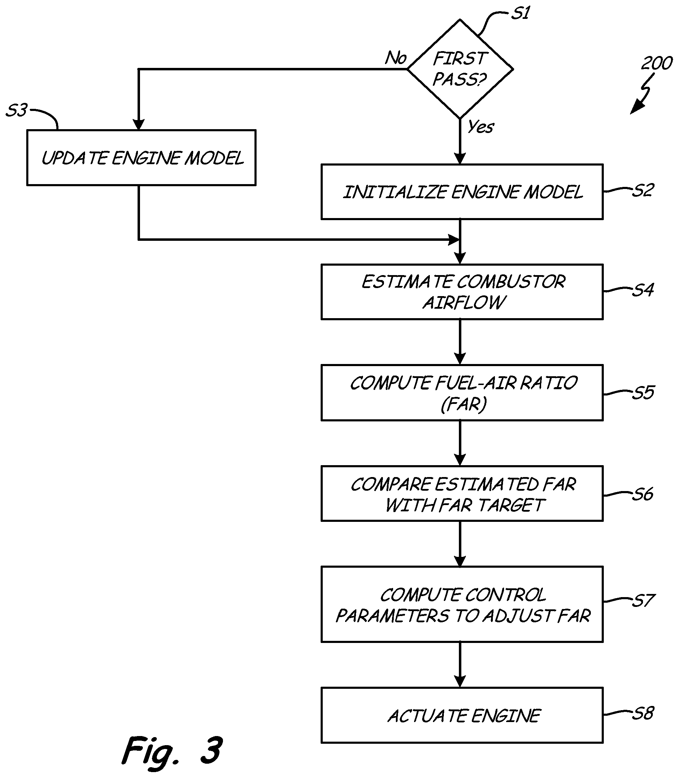

Primary flow Fp is compressed in low pressure compressor 30 and high pressure compressor 32. Some portion of primary flow Fₚ is diverted or bled from compressor section 12 for cooling and peripheral systems, and/or to avoid compressor stall. The remainder of primary flow Fₚ constitutes combustor airflow F_{c}, the airflow into combustor 14. Combustor airflow F_{c} is mixed with fuel flow F_{f} in combustor 14 and ignited to generate hot combustion gas. Fuel flow F_{f} is controlled to avoid violating a lean fuel-air ratio (FAR) limit corresponding to lean blowout, as described in further detail below with respect to FIGs. 2 and 3. Ignited combustion gas expands to provide rotational energy in high pressure turbine 34 and low pressure turbine 36, driving high pressure compressor 32 and low pressure compressor 30, respectively. Expanded combustion gases exit through exhaust section (or exhaust nozzle) 20, which can be shaped or actuated to regulate the exhaust flow and improve thrust performance.

Low pressure shaft 38 and high pressure shaft 40 are mounted coaxially about centerline C_{L}, and rotate at different speeds. Fan rotor (or other propulsion stage) 26 is rotationally coupled to low pressure shaft 38. Fan rotor 26 may also function as a first-stage compressor for gas turbine engine 10, and LPC 30 may be configured as an intermediate compressor or booster. Gas turbine engine 10 may be embodied in a wide range of different shaft, spool and turbine engine configurations, including one, two and three-spool turboprop and (high or low bypass) turbofan engines, turboshaft engines, turbojet engines, and multi-spool industrial gas turbines.

Operational parameters of gas turbine engine 10 are monitored and controlled by a control system including FAR control system 100, described below with respect to FIG. 2. FAR control system 100 monitors FAR in combustor 14, and controls estimated fuel-air ratio F_{f} to minimize risk of lean blowout.

FIG. 2 is a schematic block diagram of a FAR control system 100, comprising gas turbine engine 10 and electronic engine control 102 with engine model 104, ratio block 106, difference block 108, model based control block 110, and model correction 112. As described above with respect to FIG. 1, FAR control system 100 predicts and corrects FAR in combustor 14 to avoid lean blowout. The logic flow paths indicated in FIG. 2 reflect one time step in an iteratively repeating real time control process.

Electronic engine control system 102 is a digital controller that commands actuators of gas turbine engine 10 based on a specified FAR limit FAR_{L}, measured engine parameters MEP, and environmental parameters EVP. In particular, electronic engine control system 102 commands estimated fuel-air ratio Fp via engine control parameters ECP. Model-based control system 102 also utilizes calibration parameters (not shown) which are set at manufacture or during maintenance, and which do not vary substantially during engine operation. Measured engine parameters MEP may, for instance, include rotor speeds and sensed pressures and temperatures at inlet 18 of LPC 30 and at the outlet of HPC 32 into combustor 14.

Electronic engine control system 102 is comprised of five sections: engine model 104, compressor ratio block 106, difference block 108, model based control block 110, and model correction 112. These logic blocks represent distinct processes performed by electronic engine control 102, but may share common hardware. In particular, engine model 104, ratio block 106, model based control block 110, and model correction 112 may be logically separable software algorithms running on a shared processor or multiple parallel processors of a full authority digital engine controller (FADEC) or other computing device. This device may be a dedicated computer, or a computer shared with other control functions for gas turbine engine 10.

Engine model 104 is a logical block incorporating a model of gas turbine engine 10. In some embodiments, engine model 104 may be a component-level model describing only compressor section 12. In other embodiments, engine model 104 may be a system-level model describing the entirety of gas turbine engine 10. Engine model 104 may, for instance, be constructed based on the assumption that specific heats and gas constants within gas turbine engine 10 remain constant over one timestep. Similarly, engine model 104 may incorporate simplifying assumptions that unaccounted pressure losses across gas turbine engine 10 and torque produced by cooling bleed mass flow are negligible. The particular simplifying assumptions used by engine model 104 are selected for high accuracy during normal modes of operation of gas turbine engine 10, and may not hold during some exceptional operating conditions such as engine surge.

Engine model 104 produces a real time estimate of combustor airflow Fc based on environmental parameter EVP, engine measured engine parameters MEP, and engine control parameters ECP corresponding to a previous iteration of the logic process of compressor control system 100. Engine model 104 also estimates limit fuel-air ratio FAR_{L}, an optimal or proper FAR selected to avoid lean blowout based on current flight conditions, as described in greater detail below. In further embodiments, engine model 104 may concurrently be used to estimate other current state parameters gas turbine engine 10 for other (non-FAR) control applications.

Ratio block 106 produces estimated fuel air ratio FAR_{E}. FAR_{E} is the ratio of fuel flow F_{f} to combustor airflow F_{c}. As shown in FIG. 2, fuel flow F_{f} may be a commanded fuel flow specified by model based control block 110. Alternatively, fuel flow F_{f} may be a sensed quantity from among measured engine parameters MEP. Difference block 108 takes the difference between estimated fuel-air ratio FAR_{E} and a commanded limit fuel-air ratio FAR_{L} to produce error E. FAR_{L} is estimated by engine model 104 as shown in FIG. 2 and described above.

Model based control block 110 commands actuators of gas turbine engine 10 via engine control parameters ECP. Engine control parameters ECP reflect a plurality of engine operating parameters, including fuel flow F_{f}. In some embodiments, engine control parameters ECP may also include actuator commands for inlet guide vanes, bleed valves, and variable geometry stator vanes to adjust combustor airflow F_{c}, thereby providing an alternative or additional route to correct combustor fuel-air ratio. Model based control block 110 may perform other functions in addition to lean blowout avoidance via FAR control, in which case engine control parameters ECP may include a wide range of additional actuator commands. Model based control 110 determines engine control parameters at least in part based on error signal E. In particular, model based control 110 specifies commanded fuel flow F_{F} so as to correct for any fuel excess or deficiency indicated by FAR_{E}. If estimated fuel-air ratio FAR_{E} falls below limit fuel-air ratio FAR_{L}, model based control 110 will respond to resulting positive error E by adjusting fuel flow F_{f} upward via engine control parameters ECP.

Engine control parameters ECP are also received by engine model 104 in preparation for a next timestep. Model correction 112 updates engine model 104 for the next timestep, correcting for gradual drift due and deterioration of gas turbine engine 10. With the aid of model correction block 112, the approximation provided engine model 104 converges on actual engine behavior sufficiently quickly to ensure that the model remains a good predictor of actual engine values, but sufficiently slowly to avoid tracking noise in measured engine parameters MEP and environmental parameter EVP.

FIG. 3 is a flowchart of control method 300, an exemplary method carried out by FAR control system 100 to avoid lean blowout. Control method 300 may be repeated many times during operation of FAR control system 100. Method 300 differentiates between first and subsequent passes. (Step S1). In the first iteration of method 300, engine model 104 is initialized using measured engine parameters MEP and control values corresponding to a default actuator state of gas turbine engine 10. (Step S2). In subsequent iterations of method 300, engine model 104 is updated using engine parameters ECP produced in previous iterations. (Step S3). Engine model 102 estimates combustor airflow F_{C} in real time. (Step S4). Ratio block 106 computes estimated fuel-air ratio FAR_{E} by dividing fuel flow F_{f} by estimated combustor airflow F_{c}. (Step S5). Fuel flow F_{f} may be measured directly, or may be specified by model based control 110. Difference block 108 produces error E as a means of comparing estimated fuel-air ratio FAR_{E} with limit fuel air ratio FAR_{L}. (Step S6). Error E is the difference between estimated fuel air ratio FAR_{E} and limit fuel-air ratio FAR_{L}. Model-based control block 110 computes engine control parameters ECP including fuel flow F_{f} to correct for error E. (Step S7). Finally, engine control parameters ECP are used both to actuate fuel flow and other engine parameters (Step S8).

FAR control system 100 meters fuel flow F_{f} based on an estimate of FAR derived from a current or previous-iteration value of fuel flow F_{f} and a realtime model-based estimation of combustor airflow F_{c}. Model-based estimation of combustor airflow F_{c} allows improved precision in FAR estimation over prior art indirect management of fuel air ratio FAR by means of pressure sensors. This improved accuracy in turn allows improved transient capability and reduced emissions of gas turbine engine 10 by enabling leaner operation of combustor 14 without risk of lean blowout.

It is intended that the invention will not be limited to the particular embodiment(s) disclosed, but that the invention will include all embodiments falling within the scope of the appended claims.

## Claims

1. A fuel-air ratio control system (100) for a gas turbine engine (10), the fuel-air ratio control system (100) comprising:
an engine model (104) configured to estimate combustor airflow (Fc) based on environmental and engine parameters;
a ratio block (106) configured to calculate an estimated fuel-air ratio (FAR_{E}) by dividing combustor fuel flow (F_{F}) by the estimated combustor airflow (Fc);
a difference block (108) configured to produce an error (E) indicating the difference between the estimated fuel-air ratio (FAR_{E}) and a limit fuel-air ratio (FAR_{L});
a model based control block (110) configured to control actuators of the gas turbine engine (10) to avoid lean blowout by correcting for the error (E), wherein the engine model (104) also produces the limit fuel-air ratio (FAR_{L}) in real time; and
a model correction block (112) configured to update the engine model (104);
wherein:
the combustor fuel flow (F_{F}) is a commanded fuel flow specified by the model based control block (110) and the model based control block is further configured to provide the combustor fuel flow (F_{F}) to the ratio block (106); and
the model correction block (112) corrects for drift and deterioration of the gas turbine engine (10) with respect to changes in measured parameters.

2. The fuel-air control system of claim 1, wherein the fuel-air ratio control system (100) controls actuators of the gas turbine engine to correct for the error (E) by increasing the combustor fuel flow (F_{F}) to increase fuel-air ratio.

3. The fuel-air control system of claim 1 or 2, wherein the fuel-air ratio control system (100) controls actuators of the gas turbine engine (10);
to avoid lean blowout by controlling at least one of inlet guide vanes, bleed valves, and variable geometry stator vanes to adjust combustor airflow (Fc).

4. The control system of claim 1, 2 or 3, wherein the engine model (104) receives engine control parameters from the model based control block (110), and updates for a next timestep using the engine control parameters.

5. The control system of any preceding claim, wherein the model correction block (112) operates on a timescale selected to avoid contaminating the engine model (104) with transient noise in measured engine parameters.

6. The control system of any preceding claim, wherein the controlling of the engine actuators to avoid lean blowout comprises correcting the error (E) by commanding a specified fuel flow into the combustor.

7. The control system of claim 6, wherein an electronic engine control system commands engine actuators to correct for a difference between the estimated combustor fuel-air ratio (FAR_{E}) and the limit fuel-air ratio (FAR_{L}) further by controlling at least one of inlet guide vanes, bleed valves, and variable geometry stator vanes to adjust combustor airflow, thereby providing an alternative or additional route to correct combustor fuel-air ratio.

8. A method for controlling a gas turbine engine (10) to avoid lean compressor blowout, the method comprising:
estimating current combustor airflow from measured engine parameters, environmental parameters, and an engine model (104);
producing a realtime estimated fuel-air ratio (FAR_{E}) from combustor fuel flow (F_{F}) and the estimated combustor airflow (Fc);
setting engine control parameters including a new fuel flow based on a difference between the realtime estimated fuel-air ratio (FAR_{E}) and a limit fuel-air ratio (FAR_{L}) produced in real time by the engine model (104);
controlling actuators of the gas turbine engine (10) based on the engine control parameters, wherein the combustor fuel flow (F_{F}) is a commanded fuel flow specified by a model based control (110) which controls the actuators;
updating the engine model (104) based on the engine control parameters; and
correcting the engine model (104) to correct for drift and deterioration of the gas turbine engine (10) with respect to changes in measured parameters.

9. The method of claim 8, wherein actuating the gas turbine engine (10) based on the engine control parameters comprises metering fuel flow based on the engine control parameters.

## Patentansprüche

1. Kraftstoff-Luft-Verhältnis-Steuersystem (100) für ein Gasturbinentriebwerk (10), wobei das Kraftstoff-Luft-Verhältnis-Steuersystem (100) Folgendes umfasst:
ein Triebwerksmodell (104), das dazu konfiguriert ist, einen Brennkammerluftstrom (Fc) auf Grundlage von Umgebungs- und Triebwerksparametern zu schätzen;
einen Verhältnisblock (106), der dazu konfiguriert ist, ein geschätztes Kraftstoff-Luft-Verhältnis (FAR_{E}) zu berechnen, indem ein Brennkammerkraftstoffstrom (F_{F}) durch den geschätzten Brennkammerluftstrom (Fc) dividiert wird;
einen Differenzblock (108), der dazu konfiguriert ist, einen Fehler (E) zu erzeugen, der die Differenz zwischen dem geschätzten Kraftstoff-Luft-Verhältnis (FAR_{E}) und einem Grenz-Kraftstoff-Luft-Verhältnis (FAR_{L}) angibt;
einen modellbasierten Steuerblock (110), der dazu konfiguriert ist, Aktoren des Gasturbinentriebwerks (10) zu steuern, um mageres Ausblasen zu vermeiden, indem der Fehler (E) korrigiert wird, wobei das Triebwerksmodell (104) zudem das Grenz-Kraftstoff-Luft-Verhältnis (FAR_{L}) in Echtzeit erzeugt; und
einen Modellkorrekturblock (112), der dazu konfiguriert ist, das Triebwerksmodell (104) zu aktualisieren; wobei
der Brennkammerkraftstoffstrom (F_{F}) ein befohlener Kraftstoffstrom ist, der durch den modellbasierten Steuerblock (110) vorgegeben ist, und der modellbasierte Steuerblock ferner dazu konfiguriert ist, den Brennkammerkraftstoffstrom (F_{F}) dem Verhältnisblock (106) bereitzustellen; und
der Modellkorrekturblock (112) Drift und Verschleiß des Gasturbinentriebwerks (10) in Bezug auf Änderungen bei gemessenen Parametern korrigiert.

2. Kraftstoff-Luft-Steuersystem nach Anspruch 1, wobei das Kraftstoff-Luft-Verhältnis-Steuersystem (100) Aktoren des Gasturbinentriebwerks steuert, um den Fehler (E) zu korrigieren, indem der Brennkammerkraftstoffstrom (F_{F}) erhöht wird, um das Kraftstoff-Luft-Verhältnis zu erhöhen.

3. Kraftstoff-Luft-Steuersystem nach Anspruch 1 oder 2, wobei das Kraftstoff-Luft-Verhältnis-Steuersystem (100) Aktoren des Gasturbinentriebwerks (10) steuert;
um mageres Ausblasen zu vermeiden, indem mindestens eines von Dralldrosseln, Abblaseventilen und Leitschaufeln mit variabler Geometrie gesteuert wird, um den Brennkammerluftstrom (Fc) einzustellen.

4. Steuersystem nach Anspruch 1, 2 oder 3, wobei das Triebwerksmodell (104) Triebwerkssteuerparameter von dem modellbasierten Steuerblock (110) empfängt und sich während eines nächsten Zeitschritts unter Verwendung der Triebwerkssteuerparameter aktualisiert.

5. Steuersystem nach einem vorhergehenden Anspruch, wobei der Modellkorrekturblock (112) auf einer Zeitskala arbeitet, die so ausgewählt ist, dass ein Kontaminieren des Triebwerksmodells (104) mit transienten Störungen in gemessenen Triebwerksparametern vermieden wird.

6. Steuersystem nach einem vorhergehenden Anspruch, wobei das Steuern der Triebwerksaktoren, um mageres Ausblasen zu vermeiden, Korrigieren des Fehlers (E) durch Befehlen eines vorgegebenen Kraftstoffstroms in die Brennkammer umfasst.

7. Steuersystem nach Anspruch 6, wobei ein elektronisches Triebwerkssteuersystem Triebwerksaktoren befiehlt, eine Differenz zwischen dem geschätzten Brennkammer-Kraftstoff-Luft-Verhältnis (FAR_{E}) und dem Grenz-Kraftstoff-Luft-Verhältnis (FAR_{L}) ferner durch Steuern von mindestens einem von Dralldrosseln, Abblaseventilen und Leitschaufeln mit variabler Geometrie zu korrigieren, um den Brennkammerluftstrom einzustellen, wodurch ein alternativer oder zusätzlicher Weg bereitgestellt wird, um das Brennkammer-Kraftstoff-Luft-Verhältnis zu korrigieren.

8. Verfahren zum Steuern eines Gasturbinentriebwerks (10), um mageres Verdichterausblasen zu vermeiden, wobei das Verfahren Folgendes umfasst:
Schätzen eines derzeitigen Brennkammerluftstroms anhand von gemessenen Triebwerksparametern, Umgebungsparametern und einem Triebwerksmodell (104);
Erzeugen eines geschätzten Echtzeit-Kraftstoff-Luft-Verhältnisses (FAR_{E}) anhand eines Brennkammerkraftstoffstroms (F_{F}) und des geschätzten Brennkammerluftstroms (Fc);
Festlegen von Triebwerkssteuerparametern, die einen neuen Kraftstoffstrom beinhalten, auf Grundlage einer Differenz zwischen dem geschätzten Echtzeit-Kraftstoff-Luft-Verhältnis (FAR_{E}) und einem in Echtzeit durch das Triebwerksmodell (104) erzeugten Grenz-Kraftstoff-Luft-Verhältnis (FAR_{L});
Steuern von Aktoren des Gasturbinentriebwerks (10) auf Grundlage der Triebwerkssteuerparameter, wobei der Brennkammerkraftstoffstrom (F_{F}) ein befohlener Kraftstoffstrom ist, der durch eine modellbasierte Steuerung (110) vorgegeben ist, die die Aktoren steuert;
Aktualisieren des Triebwerksmodells (104) auf Grundlage der Triebwerkssteuerparameter; und
Korrigieren des Triebwerksmodells (104), um Drift und Verschleiß des Gasturbinentriebwerks (10) in Bezug auf Änderungen bei gemessenen Parametern zu korrigieren.

9. Verfahren nach Anspruch 8, wobei das Betätigen des Gasturbinentriebwerks (10) auf Grundlage der Triebwerkssteuerparameter Dosieren des Kraftstoffstroms auf Grundlage der Triebwerkssteuerparameter umfasst.

## Revendications

1. Système de commande de rapport carburant-air (100) pour un moteur à turbine à gaz (10), le système de commande de rapport carburant-air (100) comprenant :
un modèle de moteur (104) conçu pour estimer un débit d'air de chambre de combustion (Fc) sur la base de paramètres environnementaux et de moteur ;
un bloc de rapport (106) conçu pour calculer un rapport carburant-air estimé (FAR_{E}) en divisant un débit de carburant de chambre de combustion (F_{F}) par le débit d'air estimé de chambre de combustion (Fc) ;
un bloc de différence (108) conçu pour produire une erreur (E) indiquant la différence entre le rapport carburant-air estimé (FAR_{E}) et un rapport carburant-air limite (FAR_{L}) ;
un bloc de commande basé sur un modèle (110) conçu pour commander des actionneurs du moteur à turbine à gaz (10) afin d'éviter un soufflage faible en corrigeant l'erreur (E), dans lequel le modèle de moteur (104) produit également le rapport carburant-air limite (FAR_{L}) en temps réel ; et
un bloc de correction de modèle (112) conçu pour mettre à jour le modèle de moteur (104) ; dans lequel
le débit de carburant de chambre de combustion (F_{F}) est un débit de carburant commandé spécifié par le bloc de commande basé sur un modèle (110) et le bloc de commande basé sur un modèle est en outre conçu pour fournir le débit de carburant de chambre de combustion (F_{F}) au bloc de rapport (106) ; et
le bloc de correction de modèle (112) corrige une dérive et une détérioration du moteur à turbine à gaz (10) par rapport à des changements de paramètres mesurés.

2. Système de commande carburant-air selon la revendication 1, dans lequel le système de commande de rapport carburant-air (100) commande des actionneurs du moteur à turbine à gaz pour corriger l'erreur (E) en augmentant le débit de carburant de chambre de combustion (F_{F}) afin d'augmenter un rapport carburant-air.

3. Système de commande carburant-air selon la revendication 1 ou 2, dans lequel le système de commande de rapport carburant-air (100) commande des actionneurs du moteur à turbine à gaz (10) ;
pour éviter un soufflage faible en commandant au moins les unes parmi des aubes directrices d'entrée, des vannes de purge et des aubes de stator à géométrie variable afin d'ajuster un débit d'air de chambre de combustion (Fc).

4. Système de commande selon la revendication 1, 2 ou 3, dans lequel le modèle de moteur (104) reçoit des paramètres de commande de moteur à partir du bloc de commande basé sur un modèle (110) et se met à jour pendant un intervalle de temps suivant en utilisant les paramètres de commande de moteur.

5. Système de commande selon une quelconque revendication précédente, dans lequel le bloc de correction de modèle (112) fonctionne sur une échelle de temps sélectionnée pour éviter la contamination du modèle de moteur (104) avec un bruit transitoire dans des paramètres de moteur mesurés.

6. Système de commande selon une quelconque revendication précédente, dans lequel la commande des actionneurs de moteur pour éviter un soufflage faible comprend la correction de l'erreur (E) en commandant un débit de carburant spécifié dans la chambre de combustion.

7. Système de commande selon la revendication 6, dans lequel un système de commande de moteur électronique commande à des actionneurs de moteur de corriger une différence entre le rapport carburant-air estimé (FAR_{E}) de chambre de combustion et le rapport carburant-air limite (FAR_{L}) en outre en commandant au moins les unes parmi des aubes directrices d'entrée, des vannes de purge et des aubes de stator à géométrie variable pour ajuster un débit d'air de chambre de combustion, fournissant ainsi une voie alternative ou supplémentaire pour corriger le rapport carburant-air de chambre de combustion.

8. Procédé de commande d'un moteur à turbine à gaz (10) pour éviter un soufflage de compresseur faible, le procédé comprenant :
l'estimation d'un débit d'air de chambre de combustion actuel à partir de paramètres de moteur mesurés, de paramètres environnementaux et d'un modèle de moteur (104) ;
la production d'un rapport carburant-air estimé (FAR_{E}) en temps réel à partir d'un débit de carburant de chambre de combustion (F_{F}) et du débit d'air de chambre de combustion (Fc) estimé ;
le réglage de paramètres de commande de moteur comportant un nouveau débit de carburant sur la base d'une différence entre le rapport carburant-air estimé (FAR_{E}) en temps réel et un rapport carburant-air limite (FAR_{L}) produit en temps réel par le modèle de moteur (104) ;
la commande d'actionneurs du moteur à turbine à gaz (10) sur la base des paramètres de commande de moteur, dans lequel le débit de carburant de chambre de combustion (F_{F}) est un débit de carburant commandé spécifié par une commande basée sur un modèle (110) qui commande les actionneurs ;
la mise à jour du modèle de moteur (104) sur la base des paramètres de commande de moteur ; et
la correction du modèle de moteur (104) pour corriger une dérive et une détérioration du moteur à turbine à gaz (10) par rapport à des changements de paramètres mesurés.

9. Procédé selon la revendication 8, dans lequel l'actionnement du moteur à turbine à gaz (10) sur la base des paramètres de commande de moteur comprend la mesure du débit de carburant sur la base des paramètres de commande de moteur.
